(19) Europäisches Patentamt
European Patent Office
Office européen des brevets

(11) Veröffentlichungsnummer : **0 022 485**
**B1**

(12) # EUROPÄISCHE PATENTSCHRIFT

(45) Veröffentlichungstag der Patentschrift : **15.12.82**

(51) Int. Cl.³ : **C 09 B 45/28**, D 06 P 1/10, D 06 P 3/02

(21) Anmeldenummer : **80103487.7**

(22) Anmeldetag : **21.06.80**

(54) **Kupfer Komplexfarbstoffe und ihre Verwendung zum Färben und Bedrucken von stickstoffhaltigen Materialien.**

(30) Priorität : **03.07.79 DE 2926761**

(43) Veröffentlichungstag der Anmeldung : **21.01.81 (Patentblatt 81/03)**

(45) Bekanntmachung des Hinweises auf die Patenterteilung : **15.12.82 Patentblatt 82/50**

(84) Benannte Vertragsstaaten : **BE CH DE FR GB IT LI**

(56) Entgegenhaltungen :
**DE C 670 935**
**US A 1 616 850**
**US A 2 111 559**
**US A 2 200 445**

**Die Akte enthält technische Angaben, die nach dem Eingang der Anmeldung eingereicht wurden und die nicht in dieser Patentschrift enthalten sind.**

(73) Patentinhaber : **BAYER AG**
**Zentralbereich Patente, Marken und Lizenzen**
**D-5090 Leverkusen 1, Bayerwerk (DE)**

(72) Erfinder : **Mennicke, Winfried, Dr.**
**Steglitzer Strasse 8**
**D-5090 Leverkusen (DE)**
Erfinder : **Westphal, Jochen, Dr.**
**Naegelestrasse 10a**
**D-4000 Düsseldorf (DE)**

**EP 0 022 485 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

Kupferkomplexfarbstoffe und ihre Verwendung zum Färben und Bedrucken von stickstoffhaltigen Materialien

Gegenstand der vorliegenden Erfindung sind Kupferkomplexe von Azofarbstoffen der Formel

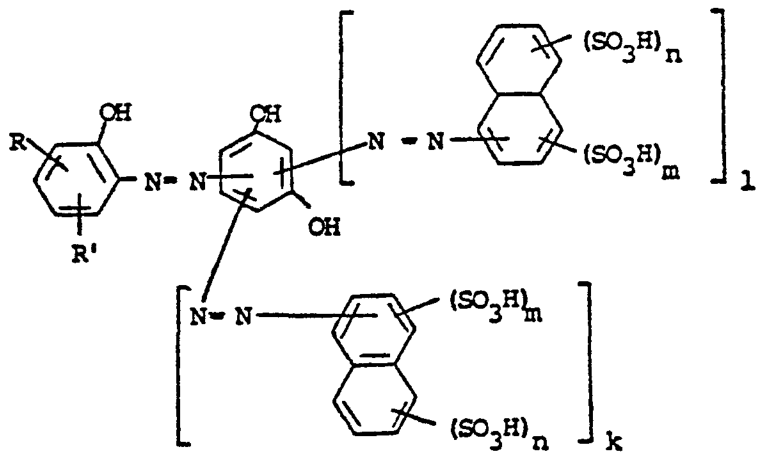

(I)

worin

R und R' Wasserstoff, Chlor oder $SO_3H$,

m 0, 1 oder 2,

n 1 oder 2

und

k und l eine Zahl von 0-1 bedeuten, wobei $l + k \geq 1$, und

m und n gleich oder verschieden sein können.

Besonders bevorzugt sind die Kupferkomplexe der Formel

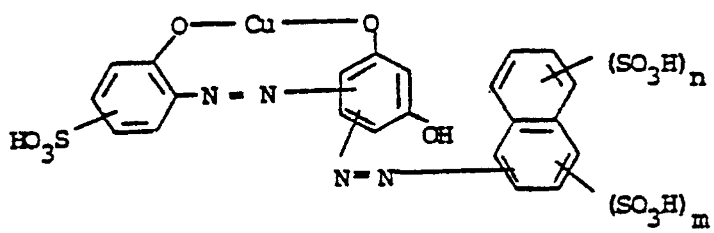

(II)

Die erfindungsgemäßen Farbstoffe (I) können hergestellt werden, indem man Resorcin in beliebiger Reihenfolge mit 1 Mol eines diazotierten Amins

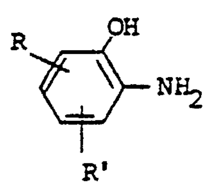

(III)

und 1 Mol eines oder zwei diazotierten Aminen

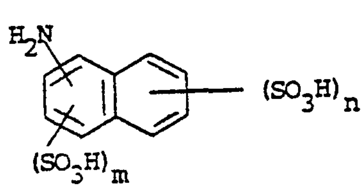

(IV)

kuppelt und anschließend metallisiert. Vorzugsweise kuppelt man Resorcin zuerst mit (III).

Die Metallisierung erfolgt in an sich bekannter Weise in wäßrigem oder wäßrig-organischem Milieu bei Temperaturen von 20-100 °C, vorzugsweise bei 70-100°, unter Normaldruck bei einem pH von 3-12, vorzugsweise 4-10. Als Lösungsmittel können niedere Alkohole wie Ethanol, Carbonamide wie Formamid oder Dimethylformamid, Ethylenglykol oder dessen Mono-$C_1$-$C_4$-Alkylether zugesetzt werden. Geeignete

kupferabgebende Mittel sind hauptsächlich die Kupfersalze von anorganischen oder organischen Säuren.

Geeignete Kupfersalze sind Kupfercarbonat, Kupferchlorid, Kupfersulfat und Kupferacetat. Die Kupferung erfolgt im allgemeinen bei 80-100 °C unter schwach sauren oder schwach alkalischen Bedingungen vorzugsweise in Gegenwart von so viel Ammoniak, daß das Kupfersalz als Tetraminkomplex gelöst ist. Die Herstellung der Kupferkomplexe (VI) ist nach H. Pfitzner und H. Baumann (Angew. Chemie 70, 232-238 (1958)) auch unter den Bedingungen der oxidativen Kupferung möglich. In diesem Fall werden die Farbstoffe (V)

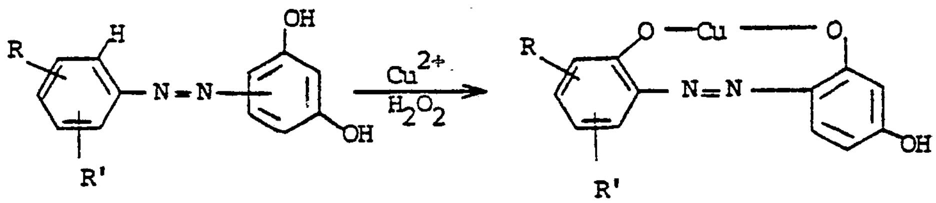


(V) (VI)

im allgemeinen bei 20-100 °C im schwach sauren Milieu mit Derivaten des Wasserstoffperoxids behandelt, beispielsweise mit einem Salz der Peroxyschwefelsäure oder Perborsäure, vorzugsweise jedoch mit Wasserstoffperoxid selbst — Bedingungen, bei denen die komplexbildende Hydroxylgruppe und Kupfer gleichzeitig in das Farbstoffmolekül eingebaut werden.

Die Metallisierung findet vorzugsweise in Anwesenheit von Säureakzeptoren statt, beispielsweise von Carbonaten, Hydrogencarbonaten, Oxiden und Hydroxiden von Alkali- und Erdalkalimetallen, wie $Li_2CO_3$, $NA_2CO_3$, $K_2CO_3$, $LiHCO_3$, $NAHCO_3$, $KHCO_3$, LiOH, NaOH, KOH, MgO oder CaO oder von alkalisch wirkenden Salzen von Alkalimetallen, wie Natrium- oder Kaliumacetat, oder von Ammoniak oder niedrigalkylsubstituiertem Ammoniak.

Bei den Kupferkomplexen sind die 1 : 1-Komplexe bevorzugt.

Farbstoffgemische erhält man bei Verwendung nichtäquivalenter Mengen (IV), da dann ein Gemisch von Mono-bzw. Disazofarbstoff und Trisazofarbstoff vorliegt.

Die neuen Metallkomplexfarbstoffe können durch Sprühtrocknen oder durch Ausfällen mit Elektrolyten, wie Natrium- oder Kaliumchlorid, isoliert werden. Sie eignen sich insbesondere zum Färben und Bedrucken stickstoffhaltiger Materialien, wie Seide, Wolle, synthetischen Fasern aus Polyamiden oder Polyurethanen, und bevorzugt zum Färben von Leder. Sie sind besonders zum Färben aus schwach alkalischem, z.B. ammonialkalischem, neutralem oder schwach sauren, z.B. essigsaurem Bad geeignet und ergeben Färbungen in lebhaften Brauntönen mit ausgezeichneten Echtheitseigenschaften.

Mit Aminen, wie Cyclohexylamin, Dicyclohexylamin oder Arylguanidinen behandelt, ergeben die erfindungsgemäßen Metallkomplexfarbstoffe Salze, die sich in organischen Lösungsmitteln lösen, und deren Lösungen beispielsweise in Alkoholen, Diolen oder Ketonen zum Spritzfärben von Leder geeignet sind.

Die angegebenen Formeln sind die der freien Säuren. Im allgemeinen setzt man die Salze, insbesondere die Alkalisalze wie die Natriumsalze ein.

Erfindungsgemäße Farbstoffe ergeben Färbungen auf Leder, die überraschenderweise höhere Echtheitseigenschaften zeigen als Färbungen mit dem nächstvergleichbaren Farbstoff des Bsp. 9, Tabelle Nr. 3 der US-Patentschrift 2 200 445.

## Beispiel 1

18,9 g 2-Aminophenol-4-sulfonsäure werden in einem Gemisch aus 100 ml Wasser und 100 g Eis in Gegenwart von 4 ml 30 %iger Salzsäure im Verlauf von 15 Minuten mit 23 ml einer 4,35 n Natriumnitritlösung diazotiert. In der erhaltenen Lösung des Diazoniumsalzes wird überschüssige salpetrige Säure mit Amidosulfonsäure zerstört. 11 g Resorcin werden in 200 ml Eiswasser mit 3 ml 10 n Natronlauge bei pH 9 und bei einer Temperatur von 0 °C gelöst. Nachdem 11 g Soda calc. zugesetzt sind, läßt man in Verlauf von 1 Stunde die Lösung des Diazoniumsalzes zutropfen und rührt eine weitere Stunde nach. Die nun fertige Lösung des Monoazofarbstoffes wird mit ca. 10 ml 30 %iger Salzsäure auf pH 7,5 gestellt und zum Sieden erhitzt, wobei man in Bereich von 80-90 °C innerhalb von 15 Minuten eine Lösung von 25 g $CuSO_4 \cdot 5H_2O$ in 50 ml Wasser und 50 ml konzentrierter Ammoniaklösung zutropft. Anschließend wird eine Stunde zum Sieden erhitzt.

22,3 g 1-Aminonaphthalin-6-sulfonsäure werden durch Verrühren in 100 ml Wasser und 10 ml 10 n Natronlauge gelöst und dann mit 28 ml 30 %iger Salzsäure wieder gefällt. Man setzt 100 g Eis zu und diazotiert in 15-20 Minuten mit 23 ml einer 4,35 n Natriumnitritlösung. Eine halbe Stunde später wird überschüssige salpetrige Säure mit Amidosulfonsäure entfernt. Die auf Raumtemperatur erkaltete dunkelbraune Lösung des Kupfer-1 : 1-Komplexes wird mit 10 n Natronlauge auf pH 8 gestellt und nach Zugabe von 25 g Soda calc. in 10 Minuten mit der diazotierten 1-Aminonaphthalin-6-sulfonsäure versetzt.

Nach vierstündigem Rühren und Einengen des Reaktionsgemisches in einem Sprühtrockner erhält man ein dunkelbraunes Pulver, welches Leder in rotbraunen Tönen von guter Lichtechtheit und guten Gebrauchsechtheiten färbt.

### Beispiel 2

18,9 g 2-Aminophenol-4-sulfonsäure werden wie in Beispiel 1 beschrieben diazotiert und auf 11 g Resorcin gekuppelt. Es folgt die Kupplung mit 22,3 g diazotierter 1-Aminonaphthalin-6-sulfonsäure, der sich erst danach die Kupferung mit 25 g $CuSO_4 5H_2O$ unter den in Beispiel 1 erwähnten Bedingungen anschließt. Durch Aussalzen mit Kochsalz erhält man ein im Vergleich zum Farbstoff des Beispiels 1 wenig gelberes Produkt, das auf Leder Färbungen mit gleich guten Echtheiten liefert.

### Beispiel 3

17,3 g p-Sulfanilsäure werden in 350 ml Wasser gelöst und mit 23 ml einer 4,35 n Natriumnitritlösung versetzt. Die Lösung wird auf ein Gemisch aus 100 ml Wasser, 350 g Eis und 28 ml 30 %iger Salzsäure ausgetragen und eine halbe Stunde verrührt. Vor dem Kuppeln wird überschüssige salpetrige Säure mit Amidosulfonsäure zerstört. Die Lösung aus 11 g Resorcin in 200 ml Eiswasser und 3 ml 10 n Natronlauge wird bei 0 °C portionsweise mit der Suspension der diazotierten p-Sulfanilsäure versetzt.

Gleichzeitig läuft soviel 20 %ige Sodalösung zu, daß der pH stets bei 9 gehalten wird. Man rührt eine Stunde bei pH 9 nach, tropft dann vorsichtig 30 %ige Salzsäure bis pH 7 zu, trägt 25 g $CuSO_4 5H_2O$ und wenig später 80 ml 20 %ige Natriumacetatlösung und 21 ml 30 %ige $H_2O_2$-Lösung ein und rührt das Ganze 15 Stunden lang bei Raumtemperatur. Der dabei entstehende Kupferkomplex der Formel

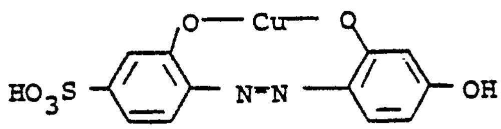

wird wie in Beispiel 1 mit 22,3 g diazotierter 1-Aminonaphthalin-6-sulfonsäure bei pH 8-9 angekuppelt. Durch Aussalzen mit Natriumchlorid, Abnutschen und Trocknen der Paste erhält man ein dunkelbraunes Pulver, welches Leder in echten rotstichig braunen Tönen färbt.

### Beispiel 4

Setzt man 1 Mol eines Farbstoffs der Formel

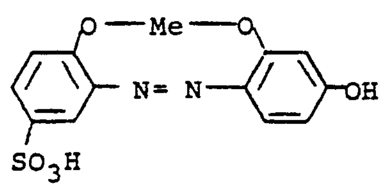

mit Me = Cu, erhalten nach den Angaben des Beispiels 1 mit den in der folgenden Aufzählung genannten Molmengen an einem oder zwei diazotierten Aminonaphthalinsulfosäuren $D-NH_2$ um, erhält man 1 : 1-Komplexe, die auf Leder rotbraune Färbungen mit guter Lichtechtheit liefern.

1,5 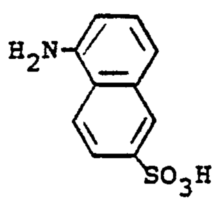 ;

2 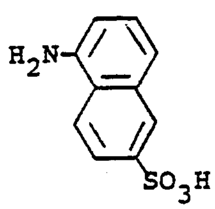 ;

1 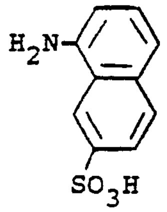 ;

1,5 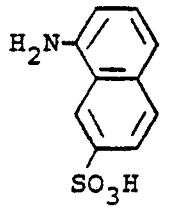 ;

0,5 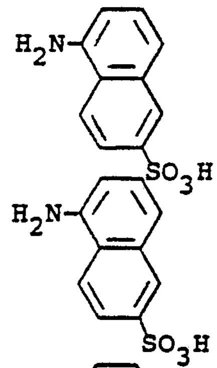 + 0,5 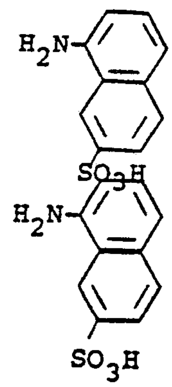 ;

0,75 + 0,75 ;

1 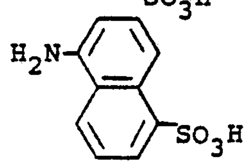

0,5 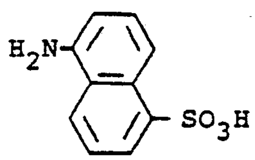 + 0,7 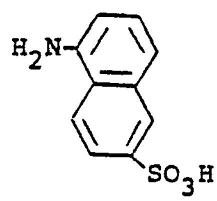 ;

1,2 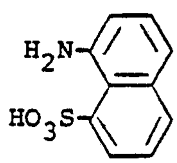 ;

1,0 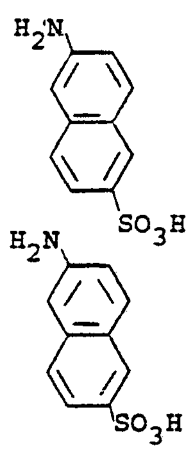 ;

1,0 + 0,5 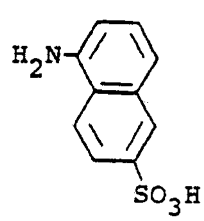 ;

1,2 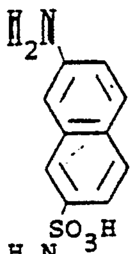 ; 0,5 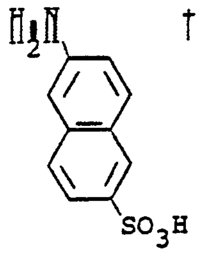 + 0,5 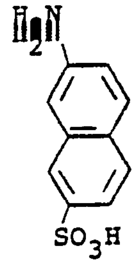

1,0 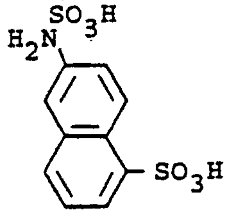 ;

1,0 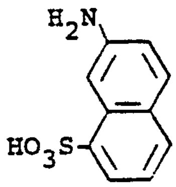 ;

0,5 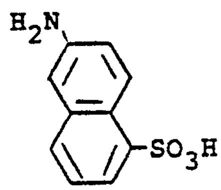 + 0,5 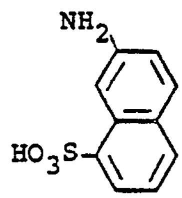 ;

0,75 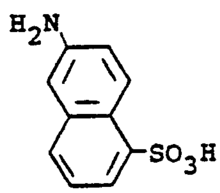 + 0,75 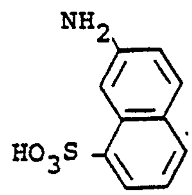 ;

1,0 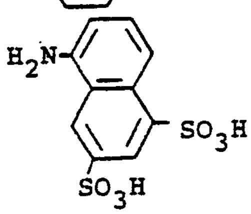 ; 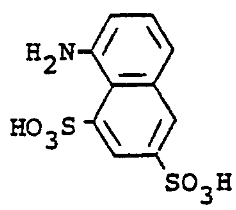 ;

1,0 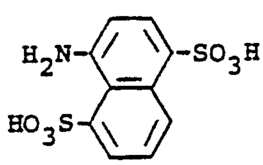 ; 1,0 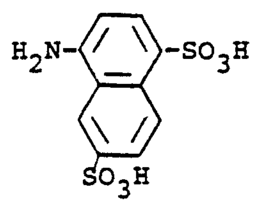 ;

1,0 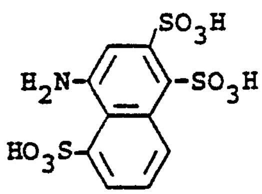 ; 1,0 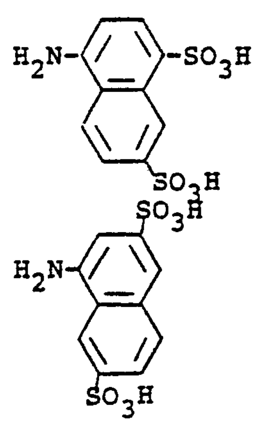 ;

1,0 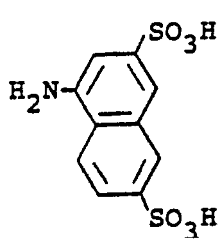 ; 1,0 ;

0,5 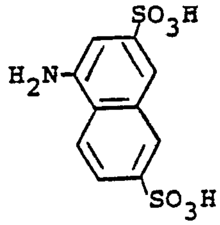 + 0,5 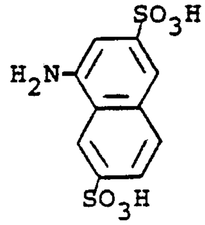 ;

1,0 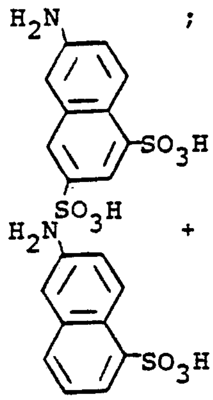 ; 1,0 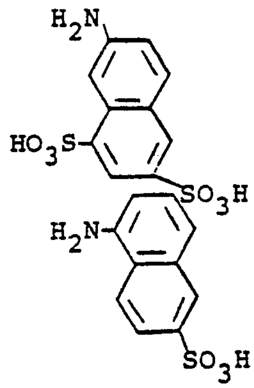 ;

1,0 + 1,0 ;

1,0 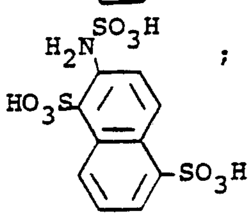 ; 1,0 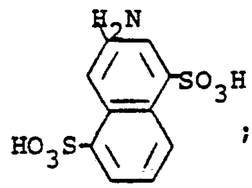 ;

1,0 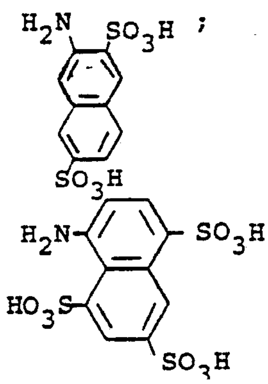 ; 1,0 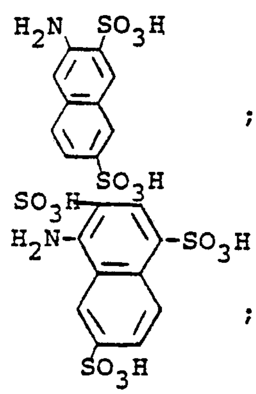 ;

1,0 ; 1,0 ;

1,0 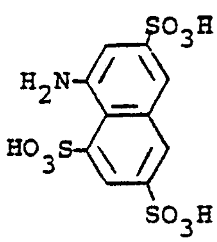 ; 1,0 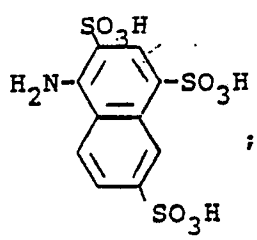 ;

1,0 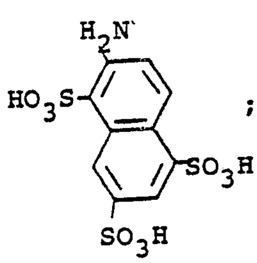 ; 1,0 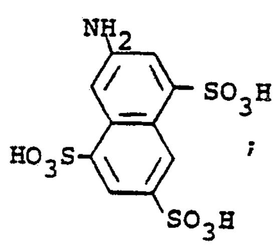 ;

0,5

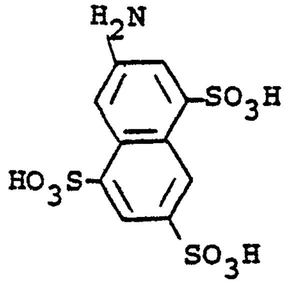

\+ 0,5

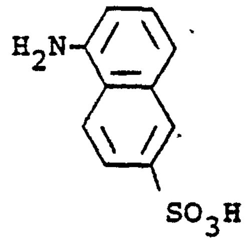

1,0

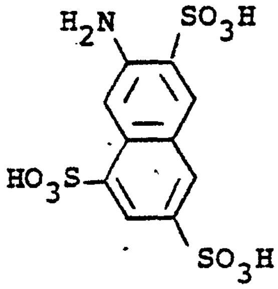

Verwendet man Metallkomplexe der Formel

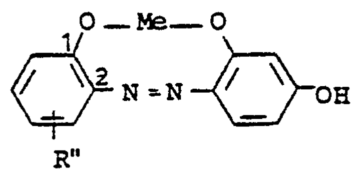

mit

Me Kupfer und

R'' Wasserstoff, 4-Cl, 4,6-di-Cl, 4-$SO_3H$, 5-$SO_3H$, 4-Cl-5-$SO_3H$, 4-Cl-6-$SO_3H$, 4-$SO_3H$-6-Cl erhält man rotstichig-braune Farbstoffe die ebenfalls zum Färben von Leder geeignet sind.

**Ansprüche**

1. Kupferkomplexe von Azofarbstoffen der Formel

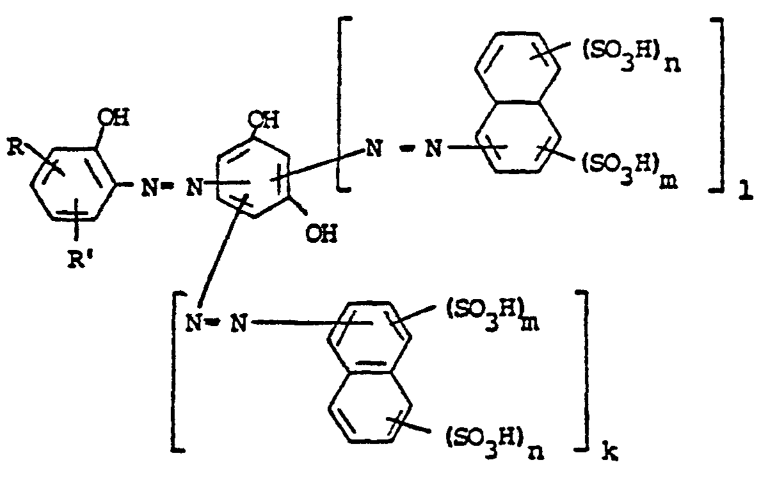

worin

R und R' Wasserstoff, Chlor oder $SO_3H$

m 0, 1 oder 2

n 1 oder 2

und

k und l eine Zahl von 0-1 bedeuten, wobei $l + k \geq 1$, und m und n gleich oder verschieden sein können

2. Kupferkomplexe der Formel

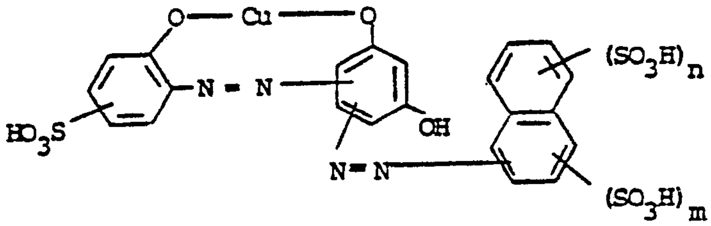

worin

m und n die gleiche Bedeutung wie im Anspruch 1 haben.

3. Verwendung der Farbstoffe der Ansprüche 1-2 zum Färben und Bedrucken stickstoffhaltiger Materialien.

## Claims

1. Copper complexes of azo dyestuffs of the formula

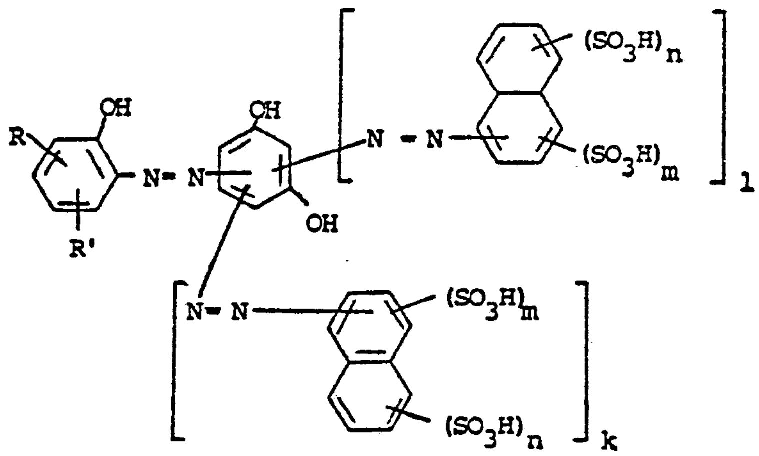

wherein

R and R′ denote hydrogen, chlorine or $SO_3H$,

m denotes 0, 1 or 2,

n denotes 1 or 2

and

k and l denote a number from 0 to 1, and $l + k \geq 1$, and

m and n can be identical or different.

2. Copper complexes of the formula

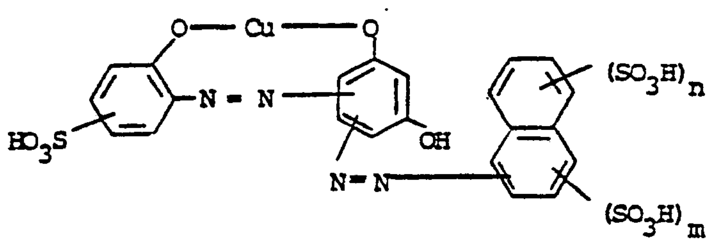

wherein

m and n have the same meaning as in Claim 1.

3. Use of the dyestuffs of Claims 1-2 for dyeing and printing nitrogen-containing materials.

## Revendications

1. Complexes de cuivre de colorants azoïques de formule :

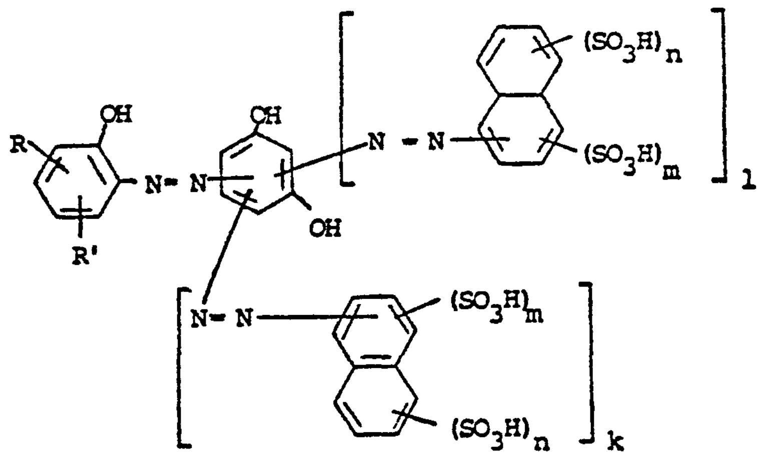

dans laquelle

R et R′ représentent chacun un atome d'hydrogène, un atome de chlore ou un groupe $SO_3H$,

m = 0, 1 ou 2,

n = 1 ou 2

et

k et l représentent un nombre de 0-1, l + k ⩾ 1, tandis que m et n peuvent être identiques ou différents.

2. Complexes de cuivre de formule :

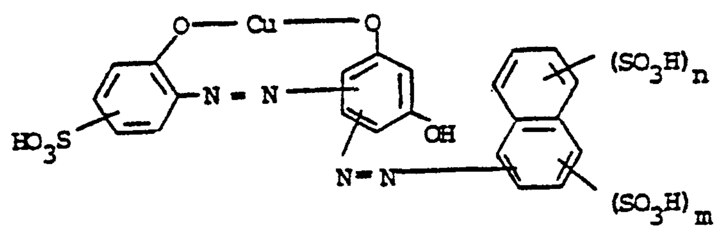

dans laquelle m et n ont les mêmes significations que celles indiquées dans la revendication 1.

3. Utilisation des colorants suivant les revendications 1-2 pour la teinture et l'impression de matières azotées.